# EUROPEAN PATENT APPLICATION

(11) **EP 2 275 916 A2**
(43) Date of publication of application: **19.01.2011**
(21) Application number: 10167386.1
(22) Date of filing: 25.06.2010
(51) Int. Cl.: G06F 3/12

(54) **Print job managing apparatus, print job managing system, and print job managing method**

(30) Priority: 29.06.2009 US 221328 P
(71) Applicant: Kabushiki Kaisha Toshiba, Tokyo 105-8001 (JP); Toshiba TEC Kabushiki Kaisha, Shinagawa-ku Tokyo 141-8664 (JP)
(72) Inventor: Ohira, Shinji, Shinagawa-ku Tokyo 141-8664 (JP)
(74) Representative: Gendron, Vincent Christian

(57) **Abstract**

Setting information for generating a print job is acquired for plural print jobs. Print job data corresponding to the respective plural print jobs are separately generated on the basis of the acquired setting information in a predetermined document file format that can be edited in at least any one of print job unit, document unit included in the job data, and page unit included in the document. Generated plural job data are stored in a predetermined storage area. The stored plural job data are combined into single job data of the predetermined document file format.

## Description

### CROSS-REFERENCE TO RELATED APPLICATION(S)

This application is based upon and claims the benefit of priority from: US provisional application 61/221328, filed on June 29, 2009; the entire contents all of which are incorporated herein by reference.

### FIELD

Embodiments described herein relate generally to a print job managing technique adopted in causing an image forming apparatus to collectively execute plural print jobs.

### BACKGROUND

In the past, a technique for causing an image forming apparatus to collectively execute plural print jobs is disclosed.

However, in the related art, it is impossible to perform print setting by freely combining units of "print job", "document", and "page" in causing the image forming apparatus to collectively execute plural print jobs.

### BRIEF DESCRIPTION OF THE DRAWINGS

FIG. 1 is a diagram of a system configuration including an image forming apparatus Q, a personal computer 2 and the like;
FIG. 2 is a longitudinal sectional view of the image forming apparatus Q;
FIG. 3 is a functional block diagram of main functions included in a print job managing apparatus;
FIG. 4 is a flowchart for explaining a flow of processing in the print job managing apparatus;
FIG. 5 is a diagram of an example of screen display on a display 206 for causing the image forming apparatus Q to collectively execute plural print jobs;
FIG. 6 is a diagram of an example of screen display on the display 206 for causing the image forming apparatus Q to collectively execute plural print jobs;
FIG. 7 is a diagram of an example of screen display on the display 206 for causing the image forming apparatus Q to collectively execute plural print jobs;
FIG. 8 is a diagram of an example of screen display on the display 206 for causing the image forming apparatus Q to collectively execute plural print jobs; and
FIG. 9 is a diagram of an example of a collective print setting screen.

### DETAILED DESCRIPTION

An embodiment is explained below with reference to the accompanying drawings.

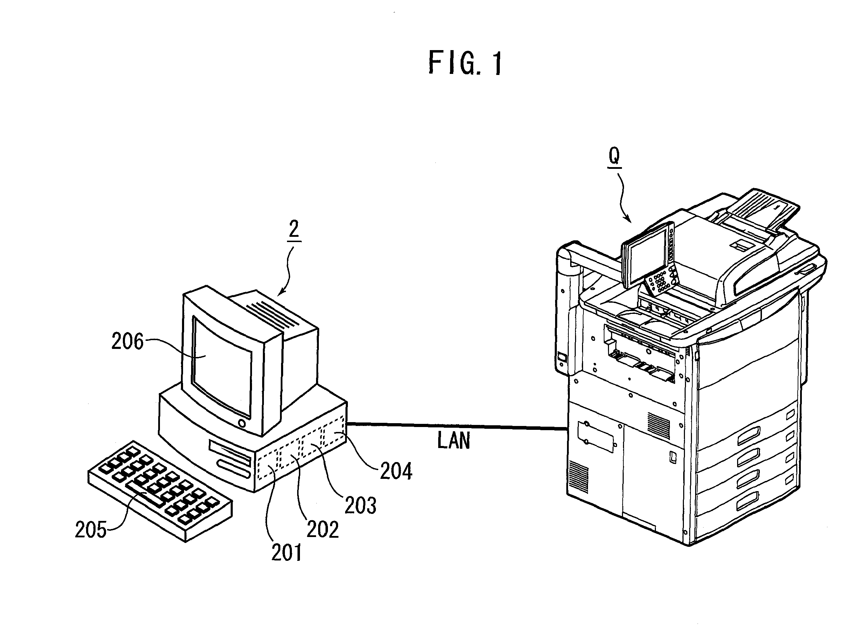

FIG. 1 is a diagram of a system configuration including an image forming apparatus Q, a personal computer 2 and the like. The image forming apparatus Q and the personal computer 2 are connected to be capable of communicating with each other via an electric communication line such as a LAN.

The personal computer 2 includes a processor 201, an ASIC (Application Specific Integrated Circuit) 202, a memory 203, a HDD (Hard Disk Drive) 204, an operation input unit 205, and a display 206.

The personal computer 2 can instruct, using a printer driver installed in the HDD 204, the image forming apparatus Q to perform printing (so-called network print). The personal computer 2 includes a print job managing apparatus.

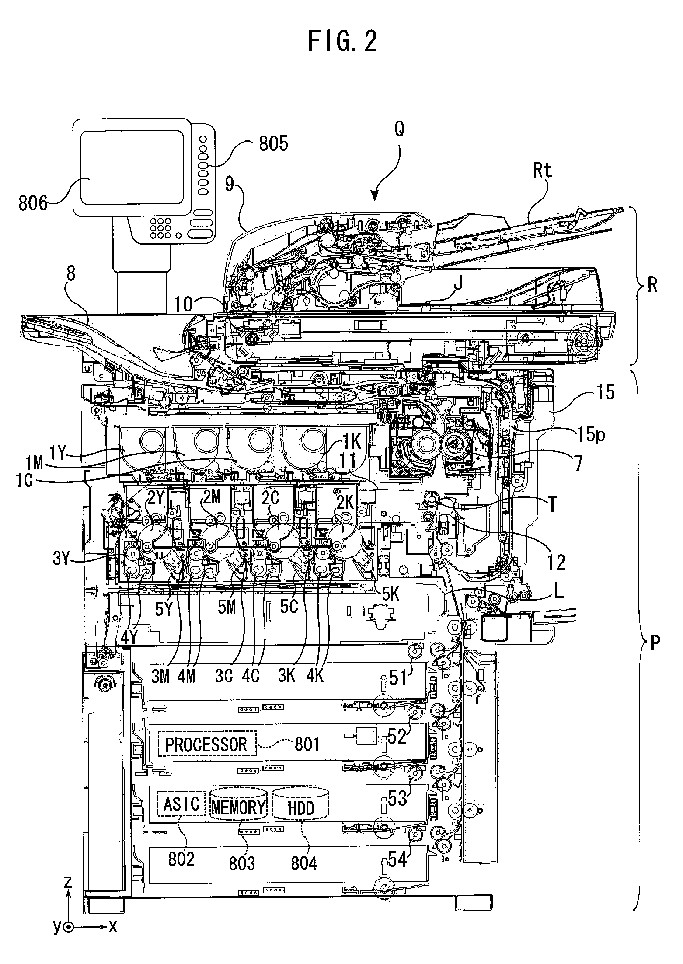

FIG. 2 is a longitudinal sectional view of the image forming apparatus Q.

The image forming apparatus Q includes an image reading unit R and an image forming unit P.

The image reading unit R scans and reads images of a sheet original document and a book original document.

The image forming unit P forms a developer image on a sheet on the basis of, for example, an image read from an original document by the image reading unit R or image data transmitted from an external apparatus to the image forming apparatus Q.

The image reading unit R includes an auto document feeder 9. The image reading unit R reads an image of an original document placed on a document tray Rt and automatically fed by the auto document feeder 9 and an image of an original document placed on a document table J.

The image forming unit P includes pickup rollers 51 to 54, photoconductive members 2Y to 2K, developing rollers 3Y to 3K, mixers 4Y to 4K, an intermediate transfer belt 11, a secondary transfer roller 12, a fixing device 7, a discharge tray 8, toner cartridges 1Y to 1K, a laser sweep unit L, and an ADU (Auto Duplex Unit) 15.

The image forming apparatus Q includes a processor 801, an ASIC 802, a memory 803, a HDD 804, an operation input unit 805, and a display 806.

The processors 201 and 801 perform various kinds of processing in the personal computer 2 and the image forming apparatus Q. The processors 201 and 801 realize various functions by executing computer programs stored in the memory 203, the memory 803, the HDD 204, the HDD 804, and the like.

It goes without saying that the processors 201 and 801 can also be realized by a CPU (Central Processing Unit) or a MPU (Micro Processing Unit) that can execute equivalent arithmetic processing. Similarly, the HDDs 204 and 804 can be substituted by a storage device such as a flash memory.

The memories 203 and 803 may be, for example, a RAM (Random Access Memory), a ROM (Read Only Memory) , a DRAM (Dynamic Random Access Memory), a SRAM (Static Random Access Memory), a VRAM (Video RAM), or a flash memory.

The operation input units 205 and 805 can include, for example, a keyboard, a mouse, a touch panel, a touch pad, a graphics tablet, or dedicated buttons.

The displays 206 and 806 can include, for example, electronic paper, a LCD (Liquid Crystal Display), an EL (Electronic Luminescence), a PDP (Plasma Display Panel), or a CRT (Cathode Ray Tube).

Functions of the operation input unit 205 and the display 206 and functions of the operation input unit 805 and the display 806 can also be realized by a so-called touch panel display.

An overview of copy processing is explained below as an example of processing in the image forming apparatus Q.

First, the pickup rollers 51 to 54 convey sheets from cassettes to a sheet conveying path. Plural roller pairs convey the sheets to a secondary transfer position T.

The image reading unit R reads images of plural sheet original documents to obtain image data.

The laser sweep unit L forms electrostatic latent images on photoconductive surfaces of the photoconductive members 2Y, 2M, 2C, and 2K on the basis of the image data.

The mixers 4Y to 4K in developing devices agitate developers in the developing devices. The developing rollers 3Y to 3K supply the developers to the electrostatic latent images on the photoconductive surfaces of the photoconductive members 2Y to 2K and visualize the electrostatic latent images. The toner cartridges 1Y to 1K supply toners to the developing devices.

The photoconductive members 2Y to 2K transfer developer images onto a belt surface of the intermediate transfer belt 11 (so-called primary transfer). The intermediate transfer belt 11 carries the developer images born on the rotating belt surface to the secondary transfer position T. The intermediate transfer belt 11 and the secondary transfer roller 12 nip and convey a sheet in the secondary transfer position T and transfer the developer images on the intermediate transfer belt 11 onto the sheet.

The fixing device 7 heats the developer images on the sheet and fixes the developer images on the sheet.

The ADU 15 reverses the sheet passed through the fixing device 7 using a reversal conveying path 15p according to necessity and feeds the sheet to the secondary transfer position T again.

The plural conveying roller pairs sequentially discharge sheets having the developer images heated and fixed thereon onto the discharge tray 8.

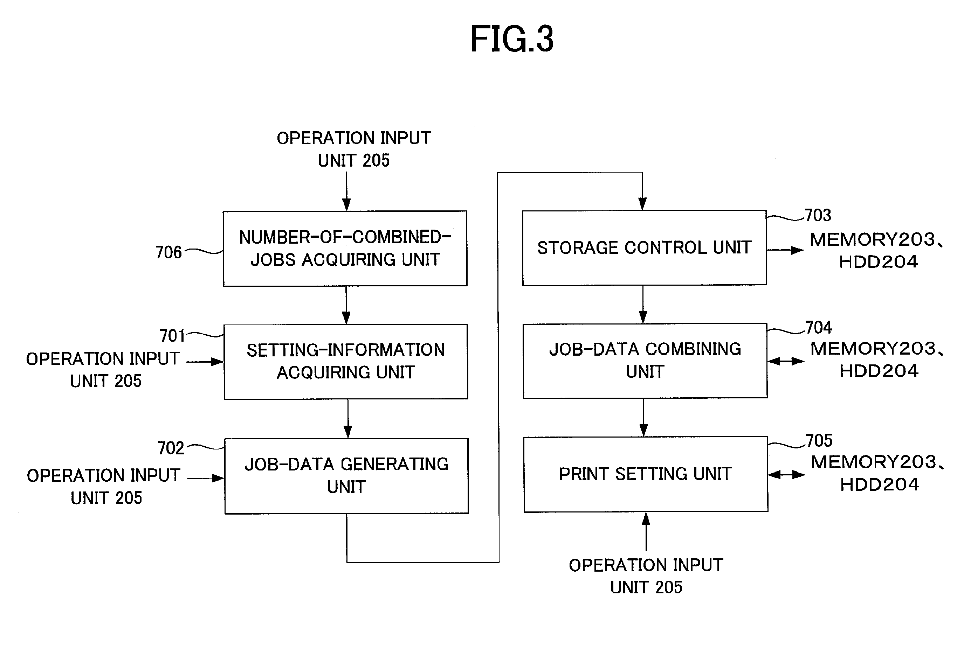

FIG. 3 is a functional block diagram of main functions of the print job managing apparatus included in the personal computer 2.

The print job managing apparatus includes, for example, a setting-information acquiring unit 701, a job-data generating unit 702, a storage control unit 703, a job-data combining unit 704, a print setting unit 705, and a number-of-combined-jobs acquiring unit 706.

The setting-information acquiring unit 701 acquires, for plural print jobs, setting information for generating a print job. Examples of the setting information include data as print targets by the print jobs, and the like.

Example of a specific method for the acquisition of the setting information by the setting-information acquiring unit 701 include, for example, a method of acquiring content or the like set in the printer driver according to operation of the operation input unit 205 by a user.

The job-data generating unit 702 separately generates, on the basis of the "setting information" acquired by the setting-information acquiring unit 701, job data corresponding to each of the plural print jobs in a predetermined document file format that can be edited in at least one of the following:
(1) "print job unit";
(2) "document unit included in the job data"; and
(3) "page unit included in the document".
Specifically, examples of the "predetermined document file format" include "XML Paper Specification format" and "Portable Document Format".

The function of the job-data generating unit 702 can be realized by, for example, the printer driver installed in the personal computer 2. Specifically, for example, in a "collective printing mode" explained later, after setting operation necessary for determining content of a print job is performed for the printer driver, when print execution is instructed, print job data that should be combined are separately output to a predetermined storage area in an XPS format.

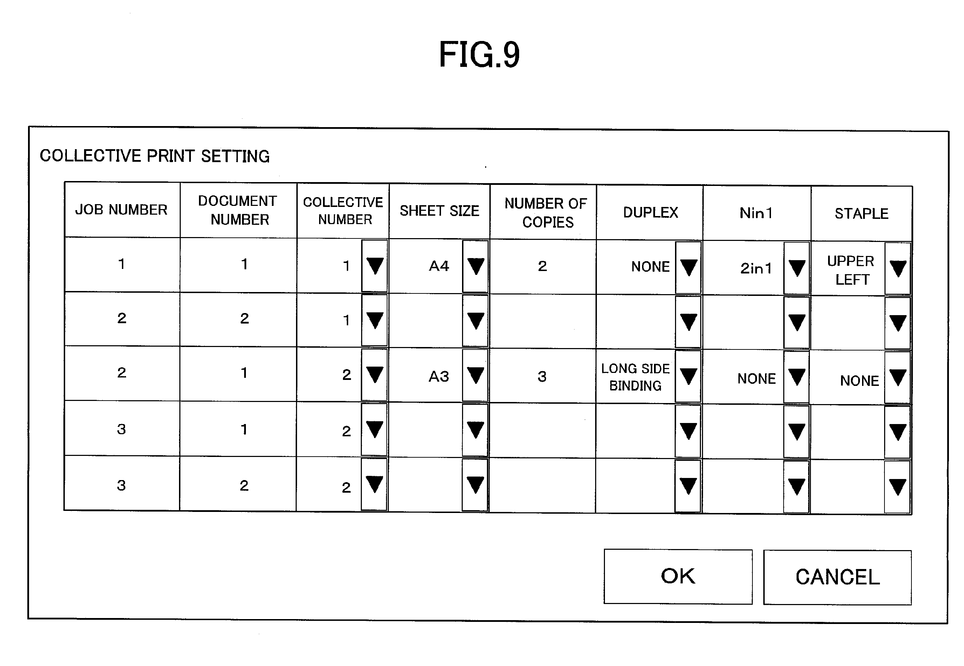

An example of an application explained later and the printer driver are associated with each other. This also makes it possible to set a job number and a document number shown in FIG. 9 on an operation screen of the printer driver before starting printing.

The storage control unit 703 causes a predetermined storage area such as a print queue, the memory 203, or the HDD 204 to store plural job data generated by the job-data generating unit 702. The storage area caused to store the job data by the storage control unit 703 only has to be eventually accessible by the job-data combining unit 704, the print setting unit 705, and the like. The storage area may be located anywhere.

The job-data combining unit 704 combines the plural job data stored in the predetermined storage area into single job data of a predetermined document file format. As explained above, examples of the "predetermined document file format" include "XML Paper Specification format" and "Portable Document Format".

Processing for combining job data can be realized by, for example, combining job data output in the predetermined document file format by using an editing function or an editing application enabled by the file format or a computer program that can realize a function similar to the editing function or the editing application.

For example, in a printer driver of an XPSDrv model, the combination processing can be realized by a Filter Pipeline service.

The print setting unit 705 can collectively perform, on the basis of an operation input of the user received by the operation input unit 205, print setting for the single job data obtained by combining the plural job data in the job-data combining unit 704.

Examples of the print setting include the following:
(1) setting of a print sheet size;
(2) setting of the number of prints;
(3) setting of presence or absence of duplex printing;
(4) setting of presence or absence of N-in-1 printing; and
(5) setting of presence or absence of stapling and a stapling position.

The print setting unit 705 displays, as a list on the display 206, setting content of each of the plural job data included in the single job data combined by the job-data combining unit 704 (see, for example, FIG. 9 referred to later).

Prior to the acquisition of the setting information by the setting-information acquiring unit 701, the number-of-combined-jobs acquiring unit 706 acquires, on the basis of an operation input received by the operation input unit 205, "number-of-combined-jobs information" indicating the number of job data as targets of combination by the job-data combining unit 704.

The setting-information acquiring unit 701 requests, on the basis of the number-of-combined-jobs information acquired by the number-of-combined-jobs acquiring unit 706, the user to perform operation input for setting information corresponding to the number of print jobs indicated by the number-of-combined-jobs information.

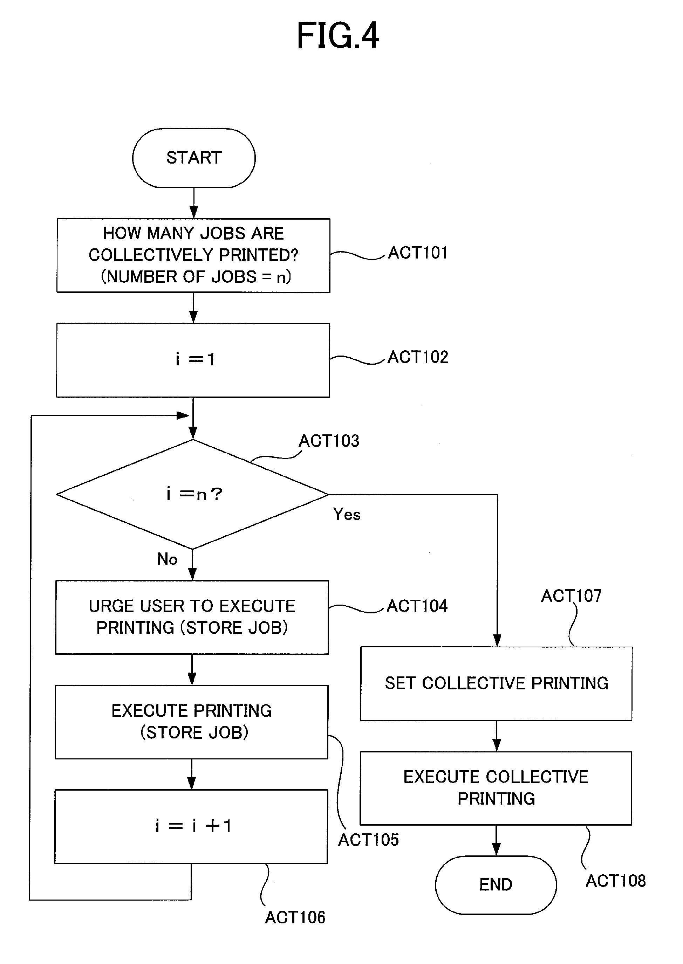

FIG. 4 is a flowchart for explaining a flow of processing in the print job managing apparatus. In the following explanation, as an example, the user gives a print instruction to the image forming apparatus Q using the printer driver installed in the personal computer 2.

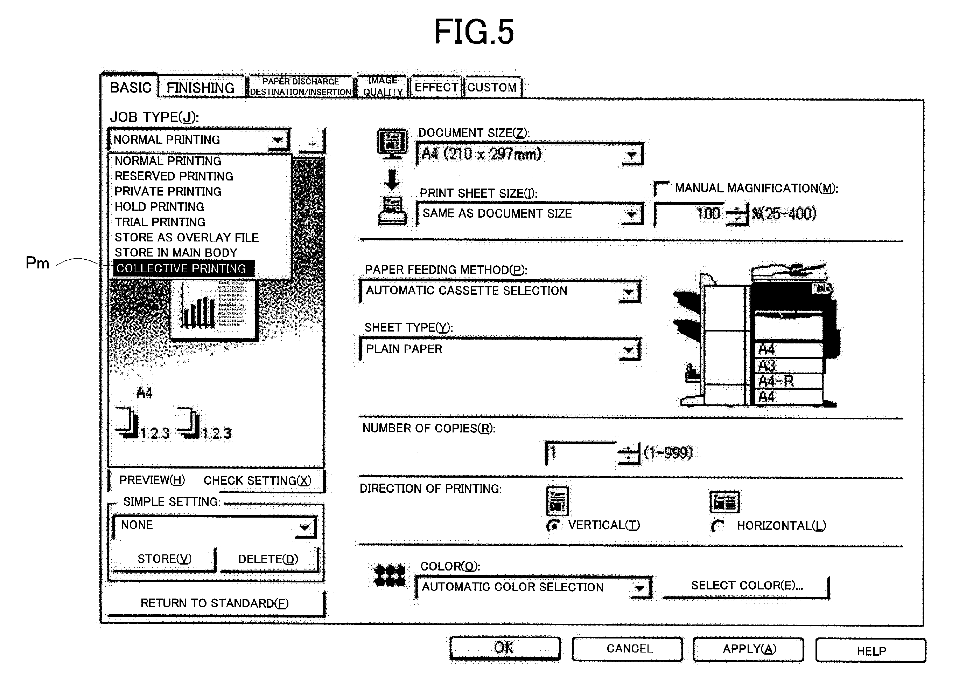

FIGS. 5 to 8 are diagrams of examples of screen display on the display 206 for causing the image forming apparatus Q to collectively execute plural print jobs.

In the following explanation, for example, three print jobs are executed after being combined by using the printer driver or set to be collectively output.

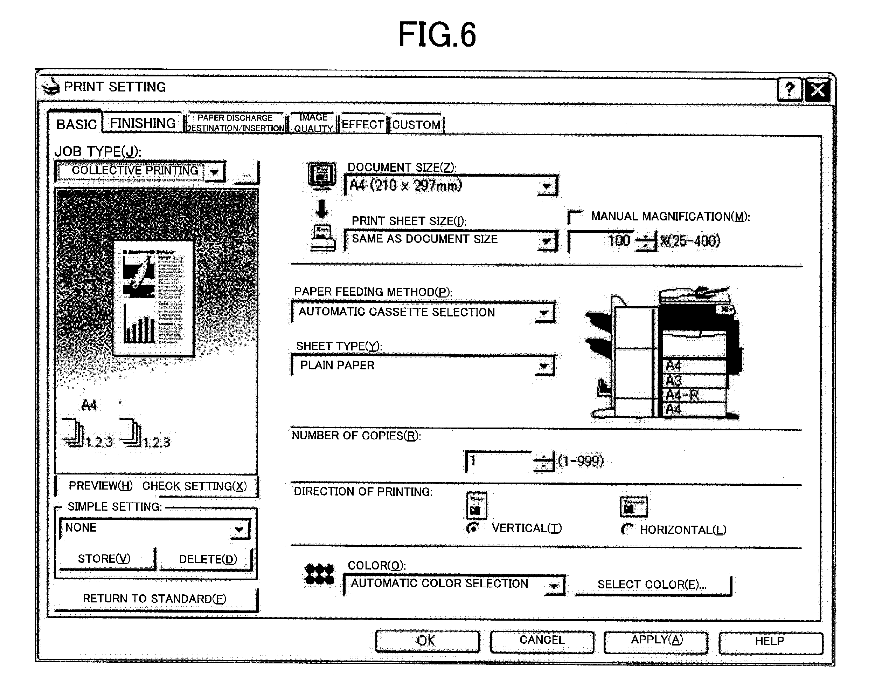

As shown in FIG. 5, the user can select "collective printing" by operating a pull-down menu Pm for selecting "job type (J)" on an operation screen of the printer driver screen-displayed on the display 206. When the user selects the "collective printing", print setting by the printer driver shifts to a collective printing mode (see FIG. 6).

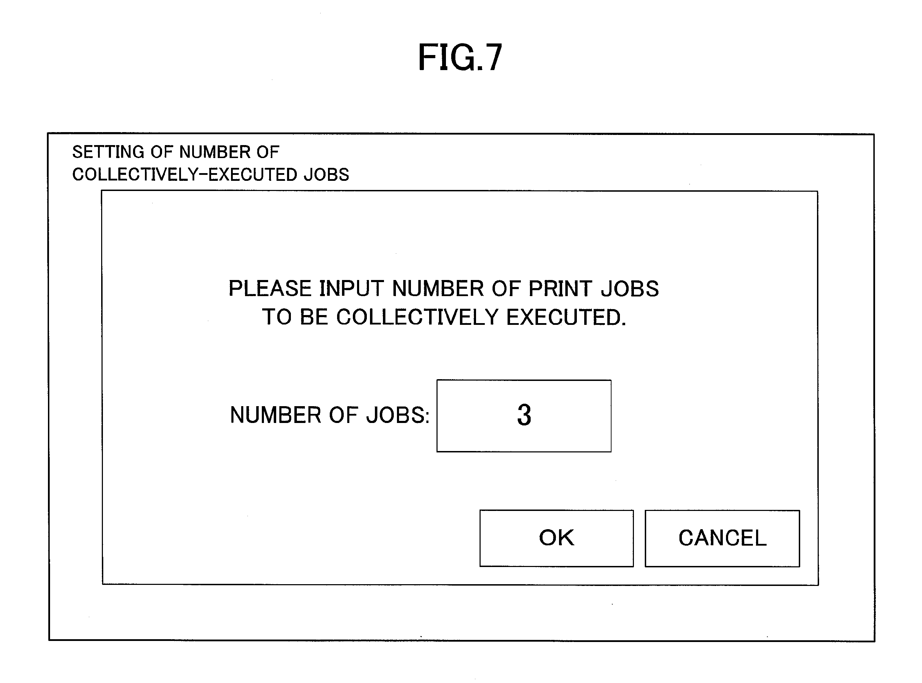

When the "collective printing" is selected as a job type, a user interface screen shown in FIG. 7 is displayed on the display 206. On the user interface screen, the processor 201 requests the user to input the number of jobs that the user is about to cause the image forming apparatus Q to collectively execute (ACT 101).

As an example, it is assumed that the user operates the operation input unit 205 to input "3" as the number of print jobs that the user is about to cause the image forming apparatus Q to collectively execute.

The processor 201 requests setting input for a print job by the number of print jobs set by the user in ACT 101 (ACT 102, ACT 103, ACT 104, and ACT 106).

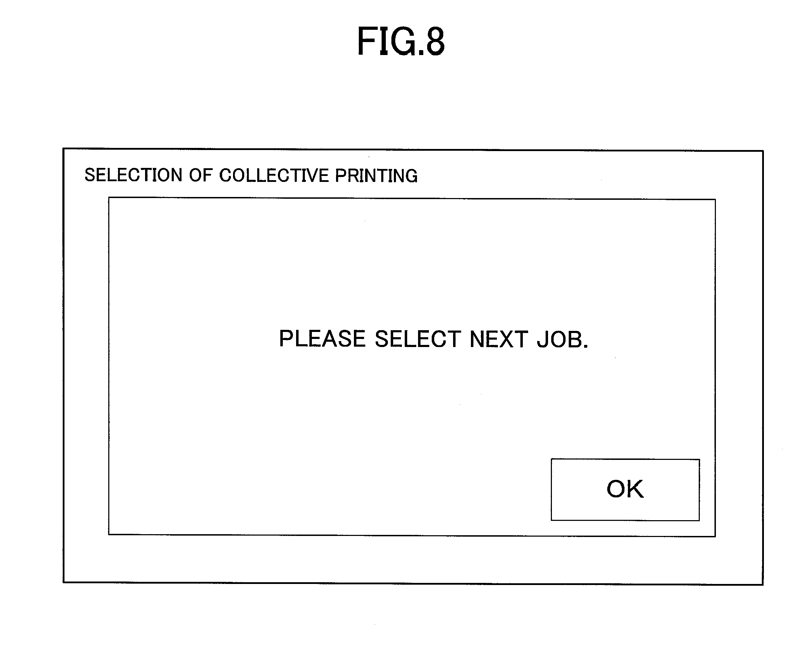

Every time the setting input for a print job is completed, the processor 201 determines whether the setting input is completed by a scheduled number of jobs to be collectively executed (ACT 103). When there is still a print job that should be input, the processor 201 causes the display 206 to screen-display a dialog box with a message or the like shown in FIG. 8 and requests the user to input setting for the print job not input yet (ACT 104).

Every time setting for a print job is input and print execution is instructed by the user, the processor 201 causes, without directly transmitting the print job to the image forming apparatus Q as a job, the HDD 204 to temporarily store setting data for specifying content of the print job as print job data of, for example, an XPS (XML Paper Specification) format (ACT 105).

The processor 201 can generate job data of the XPS format by outputting content of the printing setting set by the user using an XPS printer driver.

The "XPS printer driver" is a printer driver used when printing is performed from an application developed for Windows Vista (registered trademark) (WPF (Windows Presentation Foundation) application).

Concerning the job data of the XPS format generated in this way, like PDF (Portable Document Format) data, processing such as rearrangement of a page, rotation and trimming of the page, editing of a simple text, addition of a bookmark and a comment, and editing of confidential information can be freely performed according to functions of the WPF (Windows Presentation Foundation) application or functions of an application similar thereto.

It goes without saying that a temporary storage location of setting data for specifying content of a print job is not limited to the HDD 204. The temporary storage location can also be, for example, the memory 203 or the memory 803 or the HDD 804 in the image forming apparatus Q. In other words, the temporary storage location may be any storage area as long as setting data for specifying content of a print job can be temporarily stored in the storage area and data can be read out from the storage area by the processor 201.

If the setting input for a print job is completed by the number of jobs to be collectively executed and print execution is instructed (Yes in ACT 103), the processor 201 causes the display 206 to display a collective print setting screen shown in FIG. 9 on a printer driver screen displayed on the display 206.

The user can combine arbitrary print jobs and separately perform print setting for the print jobs by operating the collective print setting screen shown in FIG. 9 (ACT 107). Specifically, in combining plural print job data, if any one of the print job data includes plural documents, the user can rearrange the documents and freely combine the documents in document units by operating the collective print setting screen shown in FIG. 9.

For example, an application including plural documents in one file is explained.
(1) In the case of an application in which sheets treated by spreadsheet software are created in document units,
   it is assumed that one file is equivalent to "job unit", the sheets are equivalent to "document unit", and pages in the sheets are equivalent to "page unit".
(2) When documents generated by applications different from one another are collectively printed,
   it is assumed that a document file describing an agenda is equivalent to "document unit", a scanned image file is equivalent to "document unit", and a PDF file as a reference material is equivalent to "document unit".

For example, in the case explained above, the user can collectively perform, after rearranging print jobs in document units or combining different print jobs and grouping the print jobs, print setting for the different print jobs using the print setting unit 705. On the collective setting screen shown in FIG. 9, for example, in the case of the number of prints, the user can perform the print setting for the jobs by directly inputting the print setting using the operation input unit 205. Concerning other setting parameters, the user can perform the print setting by performing selection of a setting item using a pull-down menu.

In the example shown in FIG. 9, setting content of a job "1" includes only "document 1", a job "2" includes "document 1" and "document 2", and a job "3" includes "document 1" and "document 2".

The "document 1" of the job "1" and the "document 2" of the job "2" grouped by a collective number "1" are print-output with print setting including the A4 size, two copies, simplex, 2-in-1, and stapling at an upper left position.

The "document 1" of the job "2" and the "document 1" and the "document 2" of the job "3" grouped by a collective number "2" are print-output with print setting including the A3 size, three copies, duplex, no N-in-1, and no stapling.

The user decides setting content of print setting for each of plural print jobs as targets of collective printing by depressing an "OK" button on the collective print setting screen shown in FIG. 9. When the setting content is decided, concerning print job data grouped to be collectively set on the collective print setting screen, the processor 201 combines XPS files as print job data using, for example, functions of the WPF (Windows Presentation Foundation) application or functions of an application similar thereto.

As an example of a method of realizing the combination of the XPS files as the print job data, setting information explained below is notified from a module configured to perform print setting corresponding to the print setting unit 705 to a module configured to operate in the above-mentioned Filter Pipeline service for performing combination and editing of print data corresponding to the job-data combining unit 704.

An example explained below is an example of Schema created on the basis of formal PrintSchema. The Schema is equivalent to setting information that can be shared by a printer driver and an application. The Schema is temporarily stored in, for example, the memory 203 or the HDD 204 according to execution of collective print processing.

```
 <psf:Feature name="psk:JobPageOrder">
  <psf:Option name="abc:Reorder">
    <psf:Property name="abc:Job1Source">
     <psf:Value
 xsi:type="xsd:string">c:Ytest1.xps</psf:Value>
    </psf:Property>
    <psf:Property name="abc:Job2Source">
     <psf:Value
 xsi:type="xsd:string">c:Ytest2.xps</psf:Value>
    </psf:Property>
    <psf:Property name="abc:Job3Source">
     <psf:Value
 xsi:type="xsd:string">c:Ytest3.xps</psf:Value>
    </psf:Property>
    <psf:Property name="abc:ReorderDocument1">
     <psf:Value
 xsi:type="xsd:string">Job1:1,Job2:2,Job3:1,Size:ISOA4,Copi
 es:2,Duplex:False,NUp:2,Staple:TopLeft</psf:Value>
    </psf:Property>
    <psf:Property name="abc:ReorderDocument2">
     <psf:Value
 xsi:type="xsd:string">Job1:2,Job2:1,Job3:2,Size:ISOA3,Copi
 es:3,Duplex:TwoSidedLongEdge,NUp:None,Staple:None</psf:Val
 ue>
    </psf:Property>
  </psf:Option>
 </psf:Feature>
```

In this example, "abc" uses an originally defined name space as prefix.

First, second, and third jobs are temporarily stored by collectively executing. First job corresponds to "test1.xps". Second job corresponds to "test2.xps". Third job corresponds to "test3.xps".
"abc:Job1Source", "abc:Job2Source", and "abc:Job3Source" Properties designate paths to storage files as reference destinations of temporarily-stored print data. "abc:ReorderDocument1" and "abc:ReorderDocument2" Properties designate print setting performed for each of documents. The print setting is an example based on the setting shown in FIG. 9. For example, Size:ISOA4 of "abc:ReorderDocument1" represents that a sheet size of a collective number 1 is designated as the A4 size.

The reference destinations of the temporarily-stored data and the print setting are defined as explained above. This makes it possible to perform reading and recombination of the temporarily-storage data at the reference destinations and perform, in the module configured to perform combination and editing of print data corresponding to the job-data combining unit 704, creation of data added with the print setting for each of the documents.

Concerning the formal PrintSchema introduced above, a format is laid open to the public at the following URL (as of June 2, 2010):
http://msdn.microsoft.com/en-us/library/ms715098(v=V S.85).aspx

The processor 201 may cause the display 206 to perform preview display corresponding to the collectively-performed print setting or may divide the print jobs for which the print setting is collectively performed and cause the image forming apparatus Q to separately execute the divided print jobs.

The processor 201 integrates the plural print jobs, for which the content of the print setting is decided as explained above, into one print job file of the XPS format, transmits the print job file to the image forming apparatus Q, and causes the image forming apparatus Q to collectively execute the plural print jobs (ACT 109).

In this way, in the print job managing apparatus included in the personal computer 2, for example, when plural documents are included in a print job, it is possible to perform not only rearrangement in print job units but also, for example, rearrangement in document units and rearrangement in page units.

In the embodiment, the configuration in which the functions of the print job managing apparatus are included in the personal computer 2 is explained as the example. However, the present invention is not limited to this. For example, a part or all of the functions of the print job managing apparatus can also be included in the image forming apparatus Q.

In the embodiment, the collective print setting for plural print jobs is performed after all the plural print jobs as targets of collective execution are stored. However, the present invention is not limited to this.

For example, the collective print setting for plural print jobs can also be performed before storage of the plural print jobs as targets of collective execution is completed.

The processing up to job data generation can be performed in the personal computer 2. The processing for storing and combining data equivalent to the storage control unit 703 and the job-data combining unit 704 can be performed on the image forming apparatus Q side by designating the number of jobs to be combined and a combination method in the job data. The various kinds of setting in the print setting unit 705 can be realized by displaying a screen equivalent to that shown in FIG. 9 on the display 806 of the image forming apparatus Q.

The operations in the processing in the print job managing apparatus are realized by causing the processor 201 to execute a print job managing program stored in the memory 203.

It goes without saying that the processor 801 and the processor 201 can also be realized by a CPU (Central Processing Unit) or a MPU (Micro Processing Unit) that can execute equivalent arithmetic processing. The HDD 804 and the HDD 204 can also be substituted by a storage device such as a flash memory.

Further, a computer program for causing the computer included in the print job managing apparatus to execute the operations can be provided as the print job managing program. In the example explained in this embodiment, the computer program for realizing the function of carrying out the present invention is recorded in advance in the storage area provided in the inside of the apparatus. However, the present invention is not limited to this. A similar computer program may be downloaded from a network to the apparatus or a similar program stored in a computer-readable recording medium may be installed in the apparatus. A form of the recording medium may be any form as long as the recording medium can store a computer program and is computer-readable. Specifically, examples of the recording medium include internal storage devices internally installed in the computer such as a ROM and a RAM, portable storage media such as a CD-ROM, a flexible disk, a DVD disk, a magneto-optical disk, and an IC card, a database that stores a computer program, other computers and databases for the computers, and transmission medium on a line. Functions obtained by install or download in this way may be realized in cooperation with an OS (Operating System) or the like in the apparatus.

A part of the computer program or the entire computer program may be a dynamically-generated execution module.

It goes without saying that it is also possible to cause the ASIC 802 or the ASIC 202 to execute, in terms of a circuit, at least a part of the various kinds of processing realized by causing the processor to execute the computer program in the embodiment.

As explained above in detail, according to the technique described in this specification, in collectively executing plural print jobs, it is possible to freely combine elements of the print jobs to be collectively executed and collectively perform print setting.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made without departing from the sprit of the inventions. The accompanying claims and their equivalents are intended to cover such forms or modifications as would fall within the scope and spirit of the inventions.

## Claims

1. A print job managing apparatus comprising:
a setting-information acquiring unit configured to acquire, for plural print jobs, setting information for generating a print job;
a jog-data generating unit configured to separately generate, on the basis of the setting information acquired by the setting-information acquiring unit, print job data corresponding to the respective plural print jobs in a predetermined document file format that can be edited in at least any one of print job unit, document unit included in the job data, and page unit included in the document;
a storage control unit configured to cause a predetermined storage area to store plural job data generated by the job-data generating unit; and
a job-data combining unit configured to combine the plural job data stored in the predetermined storage area into single job data of the predetermined document file format.

2. The apparatus according to claim 1, further comprising:
an operation input unit configured to receive an operation input of a user; and
a print setting unit configured to perform, on the basis of the operation input received by the operation input unit, print setting for the single job data combined by the job-data combining unit.

3. The apparatus according to claim 1, wherein the print setting unit causes a display to display, as a list, setting contents of the respective plural job data included in the single job data combined by the job-data combining unit.

4. The apparatus according to claim 1, further comprising:
an operation input unit configured to receive an operation input of a user; and
a number-of-combined-jobs acquiring unit configured to acquire, on the basis of the operation input received by the operation input unit, number-of-combined-jobs information indicating a number of job data as targets of combination by the job-data combining unit, wherein
the setting-information acquiring unit requests, on the basis of the number-of-combined-jobs information acquired by the number-of-combined-jobs acquiring unit, the user to perform operation for inputting setting information equivalent to the number of print jobs indicated by the number-of-combined-jobs information.

5. The apparatus according to claim 1, wherein the job-data generating unit generates job data in an XML Paper Specification format.

6. The apparatus according to claim 1, wherein the storage control unit causes a print queue to store plural job data generated by the job-data generating unit.

7. The apparatus according to claim 1, wherein the job-data generating unit is a printer driver.

8. A print job managing method comprising:
acquiring, for plural print jobs, setting information for generating a print job;
separately generating, on the basis of the acquired setting information, print job data corresponding to the respective plural print jobs in a predetermined document file format that can be edited in at least any one of print job unit, document unit included in the job data, and page unit included in the document;
causing a predetermined storage area to store generated plural job data; and
combining the plural job data stored in the predetermined storage area into single job data of the predetermined document file format.

9. The method according to claim 8, further comprising performing, on the basis of a received operation input of a user, print setting for the combined single job data.

10. The method according to claim 8, further comprising causing a display to display, as a list, setting contents of the respective plural job data included in the combined single job data.

11. The method according to claim 8, further comprising:
acquiring, on the basis of the received operation input of the user, number-of-combined-jobs information indicating a number of job data as targets of combination; and
requesting, on the basis of the acquired number-of-combined-jobs information, the user to perform operation for inputting setting information equivalent to the number of print jobs indicated by the number-of-combined-jobs information.

12. The method according to claim 8, further comprising generating job data in an XML Paper Specification format.

13. The method according to claim 8, further comprising causing a print queue to store generated plural job data.

14. The method according to claim 8, further comprising separately generating, on the basis of acquired setting information, job data corresponding to the respective plural print jobs in the predetermined document file format using a printer driver.

15. A print job managing system comprising:
a setting-information acquiring unit configured to acquire, for plural print jobs, setting information for generating a print job;
a jog-data generating unit configured to separately generate, on the basis of the setting information acquired by the setting-information acquiring unit, print job data corresponding to the respective plural print jobs in a predetermined document file format that can be edited in at least any one of print job unit, document unit included in the job data, and page unit included in the document;
a storage control unit configured to cause a predetermined storage area to store plural job data generated by the job-data generating unit; and
a job-data combining unit configured to combine the plural job data stored in the predetermined storage area into single job data of the predetermined document file format.

16. The system according to claim 15, further comprising:
an operation input unit configured to receive an operation input of a user; and
a print setting unit configured to perform, on the basis of the operation input received by the operation input unit, print setting for the single job data combined by the job-data combining unit.

17. The system according to claim 15, wherein the print setting unit cause a display to display, as a list, setting contents of the respective plural job data included in the single job data combined by the job-data combining unit.

18. The system according to claim 15, further comprising:
an operation input unit configured to receive an operation input of a user; and
a number-of-combined-jobs acquiring unit configured to acquire, on the basis of the operation input received by the operation input unit, number-of-combined-jobs information indicating a number of job data as targets of combination by the job-data combining unit, wherein
the setting-information acquiring unit requests, on the basis of the number-of-combined-jobs information acquired by the number-of-combined-jobs acquiring unit, the user to perform operation for inputting setting information equivalent to the number of print jobs indicated by the number-of-combined-jobs information.

19. The system according to claim 15, wherein the job-data generating unit generates job data in an XML Paper Specification format.

20. The system according to claim 15, wherein the storage control unit causes a print queue to store plural job data generated by the job-data generating unit.
